# EUROPEAN PATENT APPLICATION

(11) **EP 1 919 208 A2**
(43) Date of publication of application: **07.05.2008**
(21) Application number: 07110178.6
(22) Date of filing: 13.06.2007
(51) Int. Cl.: H04N 5/77

(54) **Photographing device for controlling image recording according to the state of a received image signal on image recording and an image recording method thereof**

(30) Priority: 06.11.2006 KR 20060108973
(71) Applicant: Samsung Electronics Co., Ltd., Suwon-si, Gyeonggi-do 442-743 (KR)
(72) Inventor: Jeong, Soo-man, Yeongtong-gu, Suwon-si, Gyeonggi-do (KR)
(74) Representative: Zimmer, Franz-Josef

(57) **Abstract**

The photographing device includes a receiver (210) which receives an image signal generated by capturing an image (100), a recorder (260) which records the image signal on a recording medium (270), and a controller (284) which operates the recorder (260) to record the image signal received through the receiver (210) by determining the state of the received image signal during recording of the image signal and controlling whether or not the recorder (260) is to record or continue recording the image signal based on the determined state of the image signal. Accordingly, a distorted image signal is prevented from being recorded and user convenience and efficient utilization of recording space can be enhanced.

## Description

### BACKGROUND OF THE INVENTION

### Field of the Invention:

The present invention relates to a photographing device and an image recording method thereof. More particularly, the present invention relates to a photographing device for controlling image recording according to the state of a received image signal on image recording and an image recording method thereof.

### Description of the Related Art:

Photographing devices generate an image signal by capturing an image, and record the image signal on a recording media. There are two methods to record a captured image using a photographing device. A first method is to record the captured image using a photographing unit mounted on the main body, and a second method is to record the captured image using a photographing module that is separate from the main body.

In the latter case, the photographing module and the main body may be connected wirelessly, so that an image signal of an image captured by the photographing module can be transmitted to the main body wirelessly.

If the state of a wireless channel between the photographing module and the main body is poor or deteriorates, the image signal transmitted from the photographing module to the main body is distorted and accordingly, the main body records the distorted image signal. The distorted image signal then cannot be viewed normally upon reproduction and thus, becomes an image signal having little or no value.

The presence of the distorted image between normal images provides further inconvenience to users upon reproducing and viewing the images, and wastes limited recording space in the main body.

Accordingly, a need exists for a device and method for controlling image recording according to the state of a received image signal.

### SUMMARY OF THE INVENTION

An aspect of exemplary embodiments of the present invention is to address at least the above problems and/or disadvantages and to provide at least the advantages described below. Accordingly, an aspect of exemplary embodiments of the present invention is to provide a photographing device and method for controlling image recording according to the state of a received image signal on image recording so as to prevent a distorted image signal from being recorded.

In order to achieve the above-described and other aspects of exemplary embodiments of the present invention, a photographing device is provided, comprising a receiver which receives an image signal generated by capturing an image, a recorder which records the image signal on a recording medium, and a controller which operates the recorder to record the image signal received through the receiver by determining the state of the received image signal during recording of the image signal and controlling whether or not the recorder is to record or continue recording the image signal based on the determined state of the image signal.

In an exemplary implementation, the controller operates the recorder to not record the image signal if the state of the image signal is poor.

Further, in an exemplary implementation, the controller operates the recorder to continue recording the image signal if the state of the image signal is good, and the controller operates the recorder to stop recording the image signal if the state of the image signal is poor or deteriorates.

Still further, in an exemplary implementation, the controller operates the recorder to restart the recording of the image signal if the state of the image signal improves.

Still further, in an exemplary implementation, the controller determines the state of the image signal using a synchronizing signal contained in the image signal.

Still further, in an exemplary implementation, the controller determines that the state of the image signal is poor or deteriorating if the cycle of the synchronizing signal is irregular, or if the size of the synchronizing signal exceeds a certain range.

Still further, in an exemplary implementation, the receiver receives the image signal wirelessly.

In order to achieve the above-described and other aspects of exemplary embodiments of the present invention, an image recording method of a photographing device is provided, comprising determining the state of an image signal while receiving and recording the image signal generated by capturing an image, and controlling whether or not the recorder is to record or continue recording the image signal based on the determined state of the image signal.

In an exemplary implementation, in the controlling operation, the recording of the image signal is prevented if the state of the image signal is poor.

Further, in an exemplary implementation, in the controlling operation, the recording of the image signal is continued if the state of the image signal is good, and the recording of the image signal is stopped if the state of the image signal is poor or deteriorates.

Still further, in an exemplary implementation, in the controlling operation, the recording of the image signal is restarted if the state of the image signal improves.

Still further, in an exemplary implementation, in the determining operation, the state of the image signal is determined using a synchronizing signal contained in the image signal.

Still further, in an exemplary implementation, in the determining operation, it is determined that the state of the image signal is poor or deteriorating if the cycle of the synchronizing signal is irregular, or if the size of the synchronizing signal exceeds a certain range.

Still further, in an exemplary implementation, the image signal is received wirelessly.

In order to achieve the above-described and other aspects of exemplary embodiments of the present invention, a photographing device is provided, comprising a photographing module which generates an image signal by capturing an image and transmits the image signal, and a main body which records the image signal received from the photographing module by determining the state of the received image signal during recording of the image signal and controlling the recording of the image signal based on the determined state of the image signal.

### BRIEF DESCRIPTION OF THE DRAWINGS

The above and other objects, features and advantages of certain exemplary embodiments of the present invention will become more apparent from the following description taken in conjunction with the accompanying drawings, in which;

FIG. 1 is a perspective view externally illustrating a photographing device according to an exemplary embodiment of the present invention;

FIG. 2 is a block diagram illustrating a photographing device according to an exemplary embodiment of the present invention; and

FIG. 3 is a flow chart illustrating a process of controlling the recording of an image signal according to the state of the image signal during recording of the image signal by the photographing device as shown in FIG. 2.

Throughout the drawings, the same drawing reference numerals will be understood to refer to the same elements, features and structures.

### DETAILED DESCRIPTION OF EXEMPLARY EMBODIMENTS

The matters defined in the description, such as detailed constructions and elements, are provided to assist in a comprehensive understanding of exemplary embodiments of the present invention. Accordingly, those of ordinary skill in the art will recognize that various changes and modifications of the exemplary embodiments described herein can be made without departing from the scope and spirit of the present invention. Also, descriptions of well-known functions and constructions are omitted for clarity and conciseness.

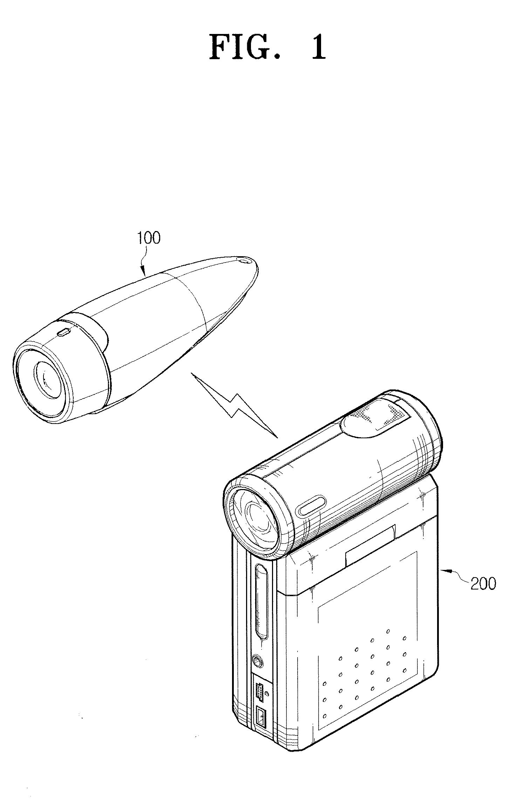

FIG. 1 is a perspective view externally illustrating a photographing device according to an exemplary embodiment of the present invention. As shown in FIG. 1, the photographing device comprises a wireless photographing module 100 and a main body 200, both of which are capable of wireless communication.

The wireless photographing module 100 generates an image signal by capturing an image and wirelessly transmits the image signal to the main body 200. The main body 200 receives and records the image signal from the wireless photographing module 100. The main body 200 can also be configured to capture an image itself and record the self-captured image signal.

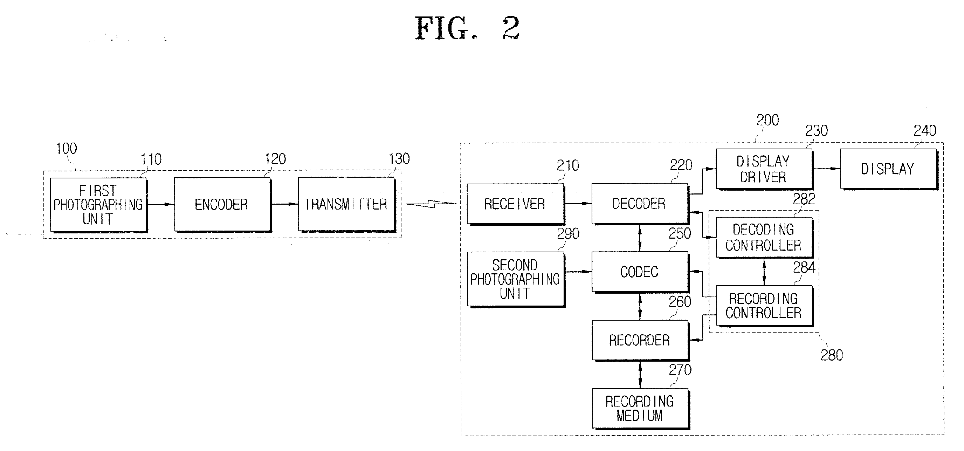

FIG. 2 is a block diagram illustrating a photographing device according to an exemplary embodiment of the present invention. The photographing device monitors the real-time state of a wirelessly received image signal if image recording starts. If it is determined that the state of the image signal is poor or deteriorates, the photographing device automatically prevents or stops image recording. Subsequently, if the state of the image signal improves, the photographing device automatically restarts image recording.

As shown in FIG. 2, the wireless photographing module 100 comprises a first photographing unit 110, an encoder 120 and a transmitter 130.

The first photographing unit 110 generates an image signal by capturing an image received through a lens, and performs digital signal processing of the image signal.

The encoder 120 converts the digital image signal output from the first photographing unit 110 into an analog image signal. The transmitter 130 then modulates the analog image signal output from the encoder 120 and wirelessly transmits the modulated image signal to the main body 200.

The main body 200 comprises a receiver 210, a decoder 220, a display driver 230, a display 240, a coder-decoder (codec) 250, a recorder 260, a controller 280, and a second photographing unit 290.

The receiver 210 demodulates the modulated image signal received from the transmitter 130 in the wireless photographing module 100. The decoder 220 then converts the demodulated analog image signal into a digital image signal.

The display driver 230 displays the image signal output from the decoder 220 on the display 240 so that users can view the captured image.

The second photographing unit 290 generates an image signal by capturing an image received through a lens, and performs digital signal processing of the image signal.

The codec 250 compresses the digital image signal output from the second photographing unit 290 or the decoder 220 in a certain compression format. The compression formats include the Moving Picture Experts Group (MPEG) and H.264 formats, but are not limited thereto, and embodiments of the present invention can be applicable to cases using any number of other compression formats.

The recorder 260 records the image signal compressed by the codec 250 on a recording medium 270. The recording medium 270 comprises any one or more of optical recording media such as a digital versatile disk (DVD), a high definition DVD (HD-DVD) and a Blu-ray Disc (BD), magnetic recording media such as a hard disk drive (HDD), and semiconductor recording media such as a memory card and a flash memory. However, embodiments of the present invention are not limited thereto, and other media capable of recording image signals can be adopted as a recording medium 270.

The controller 280 operates the codec 250 and the recorder 260 to record the image signal generated by the second photographing unit 290 or the image signal received through the receiver 210. With reference to FIG. 2, the controller 280 comprises a decoding controller 282 and a recording controller 284.

If the image signal received through the receiver 210 is to be recorded, the decoding controller 282 analyzes the digital image signal output from the decoder 220 and determines the state of the received image signal. The recording controller 284 determines whether to record or continue recording the image signal, to stop recording the image signal, or to restart the recording of the image signal, based on the state of the received image signal determined by the decoding controller 282. The recording controller 284 then operates the codec 250 and the recorder 260 according to the determined results.

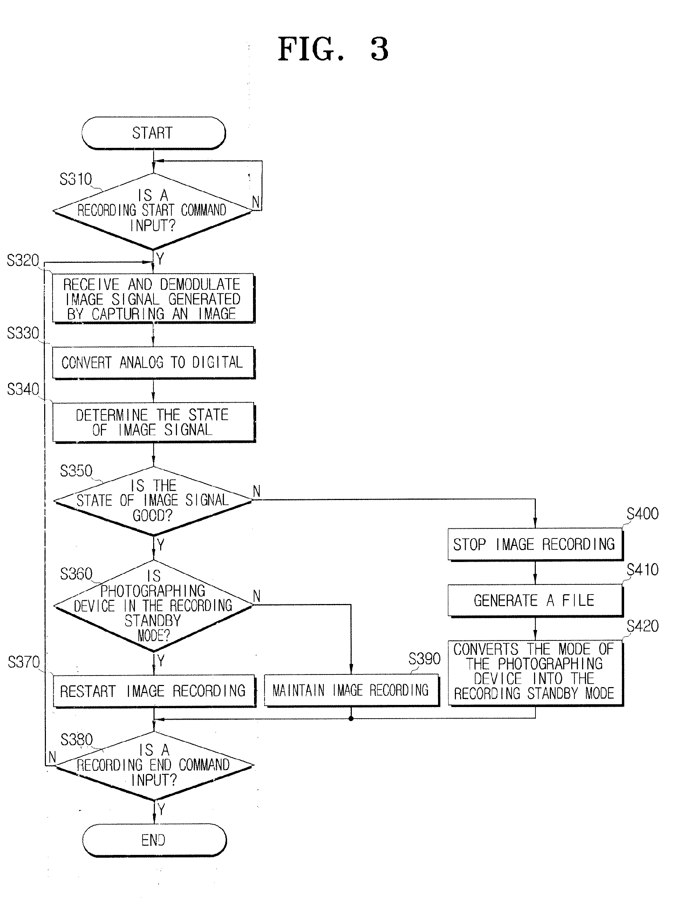

An exemplary process of controlling the recording of an image signal according to the state of the image signal during recording of the image signal generated by the wireless photographing module 100 in the photographing device as shown in FIG. 2 is discussed in greater detail below with reference to FIG. 3.

As shown in FIG. 3, if a user inputs a command for starting image recording in operation S310, the receiver 210 demodulates a modulated image signal received from the transmitter 130 mounted in the wireless photographing module 100 in operation S320. The decoder 220 converts the demodulated analog image signal into a digital image signal in operation S330.

Subsequently, in operation S340, the decoding controller 282 analyzes the digital image signal output from the decoder 220 and determines the state of the image signal received in operation S320. The decoding controller 282 can determine the state of the received image signal by analyzing a synchronizing signal contained in the digital image signal output from the decoder 220.

More specifically, if the cycle of the synchronizing signal is irregular, the decoding controller 282 can determine that the state of the image signal is poor or deteriorating. For example, if the cycle of a vertical synchronizing signal varies excessively from 1/60 second, the decoding controller 282 can determine that the state of the image signal is poor or deteriorating.

This determination is possible because, if an image signal is distorted during transmission from the wireless photographing module 100 to the main body 200, the cycle of a vertical synchronizing signal contained in the image signal becomes irregular. The decoding controller 282 can also determine the state of the image signal by analyzing the cycle of a horizontal synchronizing signal alone or in combination with the analyses of the vertical synchronizing signal.

In addition, if the size of a vertical synchronizing signal and/or a horizontal synchronizing signal exceeds a certain range, the decoding controller 282 can determine that the state of the received image signal is poor or deteriorating. This determination is possible because, if the image signal is distorted during transmission from the wireless photographing module 100 to the main body 200, the size of a synchronizing signal exceeds a certain range.

Next, in operations S350 through S420, the recording controller 284 controls the recording operation of the photographing device based on the state of the image signal determined in operation S340. The process of controlling the recording operation is discussed in greater detail below by classifying the process performed as being in response to, (1) if the state of the received image signal during image recording deteriorates, (2) if the state of the received image signal improves, and (3) if the state of the received image signal during image recording remains good.

The first case described in greater detail below is (1), when the state of the received image signal during image recording deteriorates.

If it is determined that the state of the received image signal during image recording is poor or deteriorates in operation S350, the recording controller 284 prevents or stops the recording of the received image signal in operation S400. More specifically, the recording controller 284 operates the codec 250 to stop the compressing operation and operates the recorder 260 to stop the recording operation.

The recording controller 284 operates the recorder 260 to generate the image signal recorded to this point as one file in operation S410, and then converts the mode of the photographing device into a recording standby mode in operation S420. Provided the user does not input a command for ending the recording in operation S380, the operation returns to operation S320.

In case (2), when the state of the received image signal improves, the state of the image signal received in operation S320 is determined to be good in operation S350. However, since in this case the signal is improved, the state of the previously received image signal was poor, and the photographing device is currently in the recording standby mode in operation S360.

In operation S370, the recording controller 284 restarts the recording of the received image signal that was previously stopped. More specifically, the recording controller 284 operates the codec 250 to restart the compressing operation and operates the recorder 260 to restart the recording operation. Provided the user does not input a command for ending the recording in operation 5380, the operation returns to operation 5320.

In case (3), when the state of the received image signal during image recording remains good, the state of the image signal received in operation S320 is determined to be good in operation S350. However, since in this case the state of the previously received image signal was also good, the photographing device is not currently in the recording standby mode in operation S360.

Accordingly, the recording controller 284 continues recording the received image signal in operation S390. More specifically, the recording controller 284 operates the codec 250 to maintain the compressing operation and operates the recorder 260 to maintain the recording operation. Provided the user does not input a command for ending the recording in operation S380, the operation returns to operation S320.

As can be appreciated from the above description, image recording is controlled according to the state of a received image signal on image recording in order to prevent a distorted image signal from being recorded. Accordingly, only a normal image is recorded and thus a distorted image is not presented when reproducing the images. Consequently, any user inconvenience of fast-forwarding the distorted images to reproduce the images can be prevented. In addition, recording space on the main body can be saved by not recording the distorted images.

While the present invention has been shown and described with reference to certain exemplary embodiments thereof, it will be understood by those skilled in the art that various changes in form and detail may be made therein without departing from the spirit and scope of the invention as defined by the appended claims and their equivalents.

## Claims

1. A photographing device, comprising:
a receiver, for receiving an image signal generated by capturing an image;
a recorder, for recording the image signal on a recording medium; and
a controller, for determining a state of the received image signal and controlling the recorder to record the image signal based on the determined state of the image signal.

2. The photographing device of claim 1, wherein the controller is configured to operate the recorder to continue recording the image signal if the state of the image signal is good, and the controller is configured to operate the recorder to stop recording the image signal if the state of the image signal is poor or deteriorating.

3. The photographing device of claim 2, wherein the controller is configured to operate the recorder to restart the recording of the image signal if the state of the image signal improves.

4. The photographing device of claim 1, wherein the controller is configured to determine the state of the image signal using a synchronizing signal contained in the image signal.

5. The photographing device of claim 4, wherein the controller is configured to determine that the state of the image signal is poor or deteriorating if the cycle of the synchronizing signal is irregular or if the size of the synchronizing signal exceeds a certain range.

6. The photographing device of claim 4, wherein the synchronizing signal comprises at least one of a vertical synchronizing signal contained in the image signal and a horizontal synchronizing signal contained in the image signal.

7. The photographing device of claim 1, wherein the receiver is configured to receive the image signal wirelessly.

8. An image recording method of a photographing device, the method comprising:
determining a state of an image signal while receiving and recording the image signal generated by remotely capturing an image; and
controlling whether or not the recording of the image signal is to be continued based on the determined state of the image signal.

9. The method of claim 8, wherein in the controlling operation, the recording of the image signal is controlled to be continued if the state of the image signal is good, and the recording of the image signal is controlled to be stopped if the state of the image signal is poor or deteriorating.

10. The method of claim 9, wherein in the controlling operation, the recording of the image signal is restarted if the state of the image signal improves.

11. The method of claim 8, wherein in the determining operation, the state of the image signal is determined using a synchronizing signal contained in the image signal.

12. The method of claim 11, wherein in the determining operation, it is determined that the state of the image signal is poor or deteriorating if the cycle of the synchronizing signal is irregular or if the size of the synchronizing signal exceeds a certain range.

13. The method of claim 11, wherein the synchronizing signal comprises at least one of a vertical synchronizing signal contained in the image signal and a horizontal synchronizing signal contained in the image signal.

14. The method of claim 8, wherein the image signal is received wirelessly.

15. A photographing device, comprising:
a photographing module, for generating an image signal by capturing an image and transmitting the image signal; and
a main body, for recording the image signal received from the photographing module by determining a state of the received image signal and controlling the recording of the image signal based on the determined state of the image signal.

16. An image recording method of a photographing device, the method comprising:
detecting a user input command for starting image recording, demodulating a received modulated image signal and converting the demodulated image signal into a digital image signal; and
analyzing the digital image signal and determining a state of the received image signal by analyzing a synchronizing signal contained in the digital image signal to determine if a cycle of the synchronizing signal is irregular or if a size of the synchronizing signal exceeds a certain range, and
where the state of the received image signal during image recording deteriorates, stepping the recording of the received image signal and converting a mode of the photographing device into a recording standby mode,
where the state of the received image signal improves, restarting the recording of the received image signal and converting the mode of the photographing device into a recording mode, and
where the state of the received image signal during image recording remains good, continuing the recording of the received image signal.
